(19) Europäisches Patentamt
European Patent Office
Office européen des brevets

(11) Veröffentlichungsnummer: **0 319 472**
**A2**

(12) # EUROPÄISCHE PATENTANMELDUNG

(21) Anmeldenummer: **88810798.4**

(22) Anmeldetag: **22.11.88**

(51) Int. Cl.⁴: **C 07 F 7/08**
C 08 G 77/38, C 08 G 59/32

(30) Priorität: **01.12.87 CH 4686/87**

(43) Veröffentlichungstag der Anmeldung:
**07.06.89 Patentblatt 89/23**

(84) Benannte Vertragsstaaten:
**CH DE FR GB IT LI NL**

(71) Anmelder: **CIBA-GEIGY AG**
**Klybeckstrasse 141**
**CH-4002 Basel (CH)**

(72) Erfinder: **Zahir, Sheik Abdul-Cader, Dr.**
**Elsternstrasse 12**
**CH-4104 Oberwil (CH)**

(54) **Epoxysiloxane.**

(57) Epoxysiloxane mit mindestens zwei Gruppierungen der Formel I pro Molekül

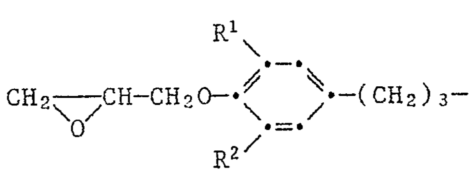

(I),

worin $R^1$ und $R^2$ unabhängig voneinander $C_1$-$C_{10}$-Alkyl, $C_1$-$C_{10}$-Alkoxy, $C_3$-$C_8$-Cycloalkyl, $C_6$-$C_{10}$-Aryl, Benzyl oder ein Halogenatom bedeuten und worin jede Gruppierung der Formel I jeweils direkt an ein Siliciumatom des Siloxanrests gebunden ist, eignen sich als Epoxidharze. Sie können zusammen mit üblichen Epoxidharzhärtern z.B. für die Herstellung von Klebstoffen, Dichtungsmaterialien, Lacken oder Umhüllungsharzen verwendet werden und ergeben Produkte mit ausgezeichneten Eigenschaften. Die erfindungsgemässen Epoxysiloxane sind auch wertvolle reaktive Verdünner und Flexibilisatoren für härtbare Epoxidharzmischungen.

EP 0 319 472 A2

**Beschreibung**

## Epoxysiloxane

Die Erfindung betrifft Epoxysiloxane mit mindestens zwei in der 3- und 5-Stellung des Benzolrings disubstituierten 3-(4-Glycidyloxyphenyl)propyl-Gruppierungen pro Molekül, ein Verfahren zu deren Herstellung sowie deren Verwendung als Epoxidharze.

Epoxysiloxane unterschiedlicher Struktur sind bekannt.

Im Lee und Neville "Handbook of Epoxy Resins", Seite 15-13, McGraw Hill, New York, 1982 wird 1,3-Bis(glycidyloxypropyl)tetramethyldisiloxan und dessen Verwendung als Epoxidharz beschrieben. Die Herstellung dieser Verbindung durch Umsetzung des Allylglycidylethers mit Tetramethyldisiloxan wird z.B. in der US 3,455,877 offenbart. Auch längerkettige Siloxane mit Glycidyloxypropylendgruppen oder mit Glycidyloxypropylseitengruppen in der Polysiloxan-Hauptkette sind aus der GB 834 326 oder aus der DE-AS 1 768 785 bekannt. E.P. Plueddemann diskutiert in J. Chem. Eng. Data 5, 59 - 62 (1960) die Verwendung dieser Verbindungen als Giessharze.

E.P. Plueddemann und G. Fenger beschreiben im J. Am. Chem. Soc. 81, 2632 - 2635 (1959) die Herstellung einer Vielzahl von Epoxysiliciumverbindungen, worin die eine Epoxyfunktion enthaltende Gruppe jeweils direkt über eine Kohlenstoff-Silicium-Bindung an Silicium gebunden ist. Dabei wird unter anderem auch 1,3-Bis(2-glycidyloxyphenylpropyl)tetramethyldisiloxan erwähnt.

Die US 4,395,527 beschreibt Siloxan enthaltende Polymere, insbesonder Polyimide. Diese Polymere können eine Vielzahl funktioneller Gruppen, darunter auch Epoxidgruppen, aufweisen. Es wird im Beispiel 64 auch ein Epoxidgruppen enthaltendes Siloxan, das 1,3-Bis[4-(2,3-epoxypropyl)phenoxybutyl]tetramethyldisiloxan und dessen Verwendung als Epoxidharz beschrieben.

Die JP-OS 86/133 222 beschreibt Epoxidharz Stoffgemische enthaltend ein Phenol modifiziertes Polysiloxan, welches durch Umsetzung eines Phenolharzes mit einem Epoxidgruppen und andere reaktive funktionelle Gruppen aufweisenden Polysiloxan erhalten wird.

In der EP-A 218 228 werden Epoxidharz Stoffgemische offenbart, welche Siloxancopolymere enthalten. Die Siloxanverbindungen werden durch Umsetzung von Alkenylgruppen enthaltenden Epoxidharzen mit Polysiloxanen hergestellt, wobei als Alkenylgruppen enthaltende Epoxidharze Reaktionsprodukte von alkenylhaltigen Phenolharzen mit Epichlorhydrin oder Produkte einer unvollständigen Umsetzung von 2-Allylphenol mit bekannten Epoxidharzen erwähnt werden. Als Beispiele solcher Epoxidharze sind allylhaltige Epoxyphenol- und Epoxykresolnovolake offenbart.

Gegenstand vorliegender Erfindung sind neue Epoxysiloxane mit mindestens zwei Gruppierungen der Formel I pro Molekül

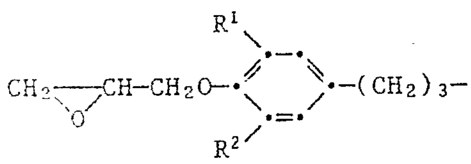

(I),

worin $R^1$ und $R^2$ unabhängig voneinander $C_1$-$C_{10}$-Alkyl, $C_1$-$C_{10}$-Alkoxy, $C_3$-$C_8$-Cycloalkyl, $C_6$-$C_{10}$-Aryl, Benzyl oder ein Halogenatom bedeuten und worin jede Gruppierung der Formel I jeweils direkt an ein Siliciumatom des Siloxanrests gebunden ist.

Die erfindungsgemässen Verbindungen können durch Hydrosilylierung eines 4-Allylphenylglycidylethers der Formel II

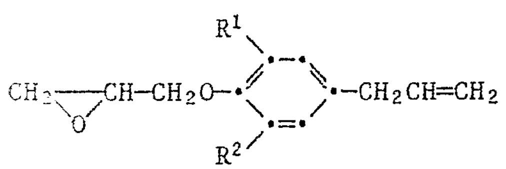

(II),

worin $R^1$ und $R^2$ die oben angegebene Bedeutung haben, mit einem mindestens zwei H-Si≡ Gruppen enthaltenden Siloxan in Gegenwart eines Katalysators hergestellt werden.

Die Hydrosilylierung, d.h. die Addition von Verbindungen mit einer oder mehreren Si-H Bindungen an olefinische Doppelbindungen ist bekannt und ist z.B. von J.L. Speier et al. in J. Am. Chem. Soc. 79, 974 - 979 (1957) oder von R. N. Meals in Pure and Appl. Chem. 13, 141 - 157 (1966) beschrieben. Geeignete Katalysatoren sind z.B. Verbindungen von Uebergangsmetallen, insbesondere von Platin, wie beispielsweise

Chlorplatinsäure. Eine Vielzahl solcher katalysierter Hydrosilylierungen wird in J. L. Speier, Advances in Organometallic Chemistry 17, 407 - 447 (1979) beschrieben.

Die Ausgangsprodukte der Formel II sind bekannt oder können nach an sich bekannten Methoden durch Umsetzung der entsprechenden 2,6-disubstituierten 4-Allylphenole mit Epihalogenhydrinen, besonders Epichlorhydrin, in Gegenwart von Katalysatoren hergestellt werden. Ein geeignetes Herstellungsverfahren für solche Verbindungen ist z.B. im Beispiel A der EP-A 205 402 beschrieben.

Die Reste $R^1$ oder $R^2$ in den Gruppierungen der Formel I können verschieden oder vorzugsweise gleich sein.

Alkyl- und Alkoxysubstituenten $R^1$ und $R^2$ können geradkettig oder verzweigt sein. Beispiele solcher Gruppen sind: Methyl, Ethyl, n-Propyl, iso-Propyl, n-Butyl, sek-Butyl, tert-Butyl, Pentyl, Hexyl, Heptyl, Octyl, Nonyl, Decyl und die diesen Alkylgruppen entsprechenden Alkoxygruppen. Stellen $R^1$ und/oder $R^2$ Cycloalkyl dar, so handelt es sich z.B. um Cyclopropyl, Cyclobutyl, Cyclopentyl, Cyclohexyl, Cycloheptyl oder Cyclooctyl. Als Arylgruppen $R^1$ und/oder $R^2$ kommen z.B. 1-Naphthyl, 2-Naphthyl und besonders Phenyl in Betracht. Beispiele für $R^1$ und/oder $R^2$ gleich Halogenatom sind Fluor-, Chlor-, Iod- und besonders Bromatome.

Bevorzugt sind Verbindungen, worin $R^1$ und $R^2$ unabhängig voneinander $C_1$-$C_5$-Alkyl, $C_1$-$C_5$-Alkoxy, $C_5$-$C_6$-Cycloalkyl, Phenyl, Benzyl oder ein Chlor- oder Bromatom bedeuten. Besonders bevorzugt sind Verbindungen, worin $R^1$ und/oder $R^2$ Ethyl, iso-Propyl, tert-Butyl, Cyclohexyl, Phenyl, ein Bromatom und insbesondere Methyl bedeuten.

Bei der Hydrosilylierung der 2,6-disubstituierten 4-Allylphenylglycidylether der Formel II kann grundsätzlich jedes beliebige Siloxan verwendet werden, das mindestens zwei H-Si≡ Gruppen enthält, d.h. jede Polysiloxanverbindung mit mindestens zwei Organosiloxaneinheiten mit endständigen und/oder seitenständigen Si-H Gruppen. Eine grosse Zahl solcher Hydrogensiloxane ist bekannt und ist zum Teil im Handel erhältlich. Es kann sich dabei um geradkettige, um verzweigte oder auch um cyclische Di-, Oligo-oder Polysiloxane handeln. Das Molekulargewicht der Hydrogensiloxane kann in einem breiten Bereich variieren, z.B. von etwa 135 bis etwa 60'000, vorzugsweise von etwa 135 bis etwa 5'000, insbesondere bis etwa 2'500. Die Synthese der erfindungsgemässen Epoxysiloxane erfolgt dabei z.B. nach dem folgenden Schema 1

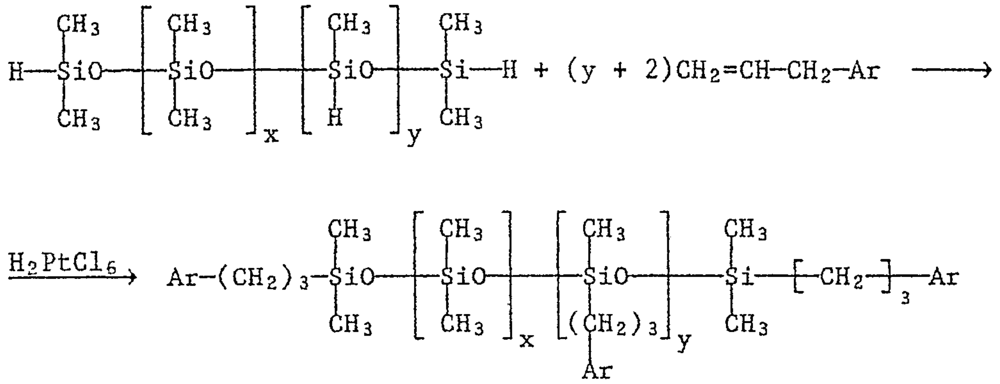


wobei Ar im Schema (1) für 3,5-disubstituiertes 4-Glycidyloxyphenyl steht. Je nach Wunsch und Anwendungszweck können bei der Hydrosilylierung alle oder nur ein Teil der Si-H Gruppen des Hydrogensiloxans mit dem 4-Allylphenylglycidylether der Formel II umgesetzt werden, und die restlichen Si-H Gruppen können gegebenenfalls mit anderen olefinische Doppelbindungen enthaltenden Verbindungen, wie z.B. Acrylatestern oder Acrylnitril, umgesetzt werden.

Beispiele geeigneter erfindungsgemässer Epoxysiloxane sind Verbindungen der Formeln III bis V

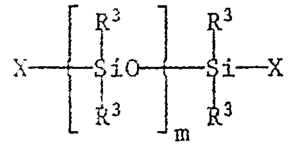 (III),

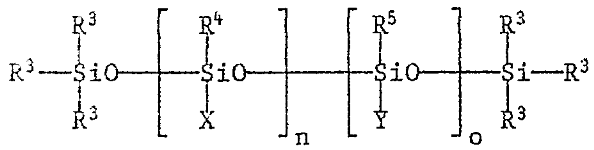 (IV),

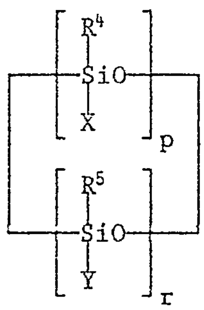 (V),

worin $R^3$ bis $R^5$ unabhängig voneinander $C_1$-$C_5$-Alkyl, $C_1$-$C_5$-Fluoralkyl oder Phenyl sind, X eine Gruppierung der Formel 1 bedeutet, Y für einen der Reste $R^3$ bis $R^5$ oder für eine Gruppe $-(CH_2)_2-CN$ oder $-(CH_2)_2-COOR^6$ mit $R^6$ gleich $C_1$-$C_5$-Alkyl steht, m eine ganze Zahl von 1 bis 500, n eine ganze Zahl von 2 bis 500, o Null oder eine ganze Zahl von 1 bis 500, p eine ganze Zahl von 2 bis 10, r Null oder eine ganze Zahl von 1 bis 8 und p + r mindestens 3 sind.

Die Alkyl bzw. Fluoralkylsubstituenten $R^3$ bis $R^5$ und $R^6$ sind vorzugsweise geradkettig. Beispiele solcher Gruppen sind: Methyl, Ethyl, Propyl, Butyl, Pentyl, Trifluormethyl, 3,3,3-Trifluorpropyl, 2,2,2-Trifluorethyl. Bevorzugt sind Epoxysiloxane der Formeln III, IV oder V, worin $R^3$ bis $R^5$ unabhängig voneinander Methyl, Ethyl, 3,3,3-Trifluorpropyl oder Phenyl, m eine ganze Zahl von 1 bis 50, n eine ganze Zahl von 2 bis 50, o Null oder eine ganze Zahl von 2 bis 50, p eine ganze Zahl von 2 bis 4 und r Null oder eine ganze Zahl von 1 bis 4 sind. Besonders bevorzugt sind Epoxysiloxane, worin $R^3$ bis $R^5$ Methyl, m 2, n 35, p 4 und o und r Null sind. Am meisten bevorzugte Verbindungen sind Umsetzungsprodukte von 4-Allyl-2,6-dimethylphenyl-, 4-Allyl-2,6-di-tert-Butylphenyl-, 4-Allyl-2,6-dicyclohexylphenyl- oder 4-Allyl-2,6-diphenylphenylglycidylether mit 1,1,3,3-Tetramethyldisiloxan oder mit einem Poly(methylhydrogen)siloxan mit endständigen Trimethylsilylgruppen und mit ca. 35 Methylhydrogensiloxaneinheiten in der Kette.

Die erfindungsgemässen Epoxysiloxane eignen sich als Epoxidharze. Sie können z.B. für die Herstellung von Klebstoffen, Dichtungsmaterialien, Lacken oder Umhüllungsharzen verwendet werden und ergeben Produkte mit ausgezeichneten Eigenschaften.

Gegenstand der Erfindung sind daher auch härtbare Epoxidharz Stoffgemische enthaltend
(a) ein erfindungsgemässes Epoxysiloxan und
(b) ein Härtungsmittel und/oder einen Härtungskatalysator für Epoxidharze.

Dabei können auch Gemische verschiedener Epoxysilane (a) und Härter (b) verwendet werden. Die Härterkomponente (b) kann sowohl wärmeaktivierbar als auch strahlungsaktivierbar sein.

Geeignete Epoxidharzhärter, welche strahlungsaktivierbar sind, sind bekannt. Beispiele dafür sind Oniumverbindungen, wie z.B. in den US 4,069,055, US 4,058,401 und US 4 394,403 beschrieben, oder vorzugsweise Metallocen-Komplexe, wie beispielsweise die in der EP-A 94 915 beschriebenen Verbindungen.

Als wärmeaktivierbare Härter (b) eignen sich an sich beliebige Epoxidharzhärter, wie z.B. Cyanamid, Dicyandiamid, Polycarbonsäuren, Polycarbonsäureanhydride, Polyamine, Polyaminoamide, Addukte aus Aminen und Polyepoxiden und Polyole.

Geeignete Polycarbonsäuren und ihre Anhydride sind z.B. Phthalsäureanhydrid, Tetrahydro- und Hexahydrophthalsäureanhydrid, Methyltetrahydrophthalsäureanhydrid, Endomethylentetrahydrophthalsäureanhydrid, Hexachlorendomethylentetrahydrophthalsäureanhydrid, Trimellitsäureanhydrid, Pyromellitsäuredianhydrid, Maleinsäureanhydrid, Bernsteinsäureanhydrid, Nonenylbernsteinsäureanhydrid, Dodecenylbernsteinsäureanhydrid, Polysebacinsäurepolyanhydrid und Polyazelainsäurepolyanhydrid sowie die zu den oben genannten Anhydriden gehörenden Säuren.

Als Beispiele von Polyaminen, die sich als Härtungsmittel eignen, seien aliphatische, cycloaliphatische,

aromatische und heterocyclische Polyamine, wie Ethylendiamin, Propan-1,2-diamin, Propan-1,3-diamin, N,N-Diethylethylendiamin, Hexamethylendiamin, Diethylentriamin, Triethylentetramin, Tetraethylenpentamin, N-(2-Hydroxyethyl)-, N-(2-Hydroxypropyl)- und N-(2-Cyanethyl)diethylentriamin, 2,2,4- und 2,4,4-Trimethylhexan-1,6-diamin, m-Xylylendiamin, N,N-Dimethyl- und N,N-Diethylpropan1,3-diamin, Bis(4-aminocyclohexyl)methan, 2,2-Bis(4-aminocyclohexyl)propan, 2,2-Bis(4-amino-3-methylcyclohexyl)propan, 3-Aminomethyl-3,5,5-trimethylcyclohexylamin (Isophorondiamin), m- und p-Phenylendiamin, Bis(4-aminophenyl)methan, Bis(4-aminophenyl)sulfon, Anilin-Formaldehydharze und N-(2-Aminoethyl)piperazin genannt. Geeignete Polyaminoamide sind z.B. solche, die aus aliphatischen Polyaminen und dimerisierten oder trimerisierten ungesättigten Fettsäuren hergestellt sind.

Als Addukte aus Aminen und Polyepoxiden kommen z.B. Addukte aus aliphatischen oder cycloaliphatischen Diaminen, wie 1,6-Hexamethylendiamin, 2,2,4- und 2,4,4-Trimethylhexan-1,6-diamin oder Isophorondiamin und bekannten Diglycidylethern in Betracht.

Als Polyolhärter (b) kommen vor allem ein- oder mehrkernige aromatische Polyole, einschliesslich Novolake in Betracht, wie Resorcin, Hydrochinon, 2, 6-Dihydroxytoluol, Pyrogallol, 1,1,3-Tris(hydroxyphenyl)propan, Bis(4-hydroxyphenyl)methan, 2,2-Bis(4-hydroxyphenyl)propan, Bis(4-hydroxyphenyl)sulfon und 4,4′-Dihydroxybiphenyl sowie Novolake aus Formaldehyd oder Acetaldehyd und Phenol, Chlorphenol oder Alkylphenolen mit bis zu 9 C-Atomen im Alkyl besonders Kresol- und Phenolnovolake.

Bevorzugte Härter sind Polycarbonsäureanhydride, wie Tetrahydro-, Hexahydro- und Methyltetrahydrophthalsäureanhydrid, aromatische Polyamine, besonders Bis(4-aminophenyl)methan, Bis(4-aminophenyl)sulfon und m- oder p-Phenylendiamin, sowie Dicyandiamid.

Die Härter (b) werden in den in der Epoxidharztechnik üblichen Mengen eingesetzt, zweckmässig in solchen Mengen, dass auf ein Epoxidäquivalent etwa 0,7 bis 1,5 Aequivalente funktioneller Gruppen des Härters (b) kommen.

Als Härtungsbeschleuniger können ebenfalls an sich bekannte Verbindungen verwendet werden. Als Beispiele seien genannt: Komplexe von Aminen, besonders tertiären Aminen, wie Monoethylamin, Trimethylamin und Octyldimethylamin, mit Bortrifluorid oder Bortrichlorid, tertiäre Amine, wie Benzyldimethylamin, Tris(dimethylaminomethyl)phenol, Hexamethylentetramin oder 1,6-Bis(dimethylamino)hexan; Harnstoffderivate, wie N-4- Chlorphenyl-N′,N′-dimethylharnstoff (Monuron), N-3-Chlor-4-methylphenyl-N′,N′-dimethylharnstoff (Chlortoluron), N-(2-Hydroxyphenyl)-N′-N′-dimethylharnstoff und N-(2-Hydroxy-4-nitrophenyl)-N′-N′-dimethylharnstoff, und gegebenenfalls substituierte Imidazole, wie Imidazol, Benzimidazol, 1-Methylimidazol, 3-Methylimidazol, 2-Ethyl-4-methylimidazol, 2-Vinylimidazol, 2-Phenylimidazol, 2-Phenyl-4-methylimidazol, 1-(2,6-Dichlorbenzoyl)-2-phenylimidazol und 1-(2,4,6-Trimethylbenzoyl)-2-phenylimidazol.

Harnstoffderivate, wie Monuron, tertiäre Amine, besonders Benzyldimethylamin, und Imidazole, besonders 2-Phenylimidazol, 3-Methylimidazol und 2-Ethyl-4-methylimidazol, sind als Beschleuniger bevorzugt.

Gegenstand der Erfindung sind auch härtbare Stoffgemische, welche neben den Komponenten (a) und (b) noch (c) weitere Epoxidharze, die keine Silicumatome aufweisen, enthalten.

Als weitere Epoxidharze (c) kommen vor allem solche mit durchschnittlich mehr als einer an ein Heteroatom, z.B. an ein S- und vorzugsweise an ein O- oder N-Atom, gebundenen Gruppe der Formel VI

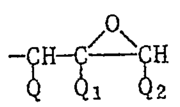 (VI)

in Betracht, wobei Q und $Q_2$ je ein Wasserstoffatom und $Q_1$ ein Wasserstoffatom oder eine Methylgruppe bedeuten oder Q und $Q_2$ zusammen $-CH_2CH_2-$oder $-CH_2CH_2CH_2-$ und $Q_1$ ein Wasserstoffatom bedeuten.

Als Beispiele solcher Harze seien Polyglycidyl- und Poly(β-methylglycidyl)ester genannt, die sich von aliphatischen, cycloaliphatischen oder aromatischen Polycarbonsäuren ableiten. Beispiele geeigneter Polycarbonsäuren sind Bernsteinsäure, Glutarsäure, Adipinsäure, Pimelinsäure, Korksäure, Azelainsäure, Sebacinsäure, dimerisierte oder trimerisierte Linolsäure, Tetrahydrophthalsäure, 4-Methyltetrahydrophthalsäure, Hexahydrophthalsäure, 4-Methylhexahydrophthalsäure, Phthalsäure, Iso-und Terephthalsäure.

Weitere Beispiele sind Polyglycidyl- und Poly(β-methylglycidyl)ether, die durch Umsetzung einer mindestens zwei alkoholische und/oder phenolische Hydroxylgruppen pro Molekül enthaltenden Verbindung mit Epichlorhydrin oder mit Allylchlorid und anschliessende Epoxidierung mit Persäuren erhalten werden.

Geeignete Polyole sind z.B. Ethylenglykol, Diethylenglykol, Poly(oxyethylen)glykole, Propan-1,2-diol, Poly(oxypropylen)glykole, Propan-1,3-diol, Butan-1,4-diol, Poly(oxytetramethylen)glykole, Pentan-1,5-diol, Hexan-2,4,6-triol, Glycerin, 1,1,1-Trimethylolpropan, Pentaerythrit und Sorbit; 1,3- und 1,4-Cyclohexandiol, Bis-(4-hydroxycyclohexyl)methan, 2,2-Bis-(4-hydroxycyclohexyl)propan und 1,1-Bis(hydroxymethyl)cyclohex 3-en; N,N-Bis(2-hydroxyethyl)anilin und 4,4′-Bis(2-hydroxyethylamino)diphenylmethan; Resorcin, Hydrochinon, Bis-(4-hydroxyphenyl)methan (Bisphenol F), 2,2-Bis(4-hydroxyphenyl)propan (Bisphenol A), 2,2-Bis(4-hydroxy-3,5-dibromphenyl)propan (Tetrabrombisphenol A), 1,1,2,2-Tetrakis(4-hydroxyphenyl)ethan, 4,4′-Dihydroxybiphenyl, Bis-(4-hydroxyphenyl)sulfon sowie Novolake aus Formaldehyd oder Acetaldehyd und Phenol, Chlorphenol oder Alkylphenolen mit bis zu 9 C-Atomen im Alkyl, besonders Kresol- und Phenol-Novolake.

Als Poly(N-glycidyl)-Verbindungen kommen durch Dehydrochlorierung von Umsetzungsprodukten aus Epichlorhydrin und Aminen mit mindestens zwei Aminwasserstoffatomen erhaltene Produkte in Betracht. Geeignete Amine sind z.B. Anilin, n-Butylamin, Bis(4-aminophenyl)methan, 1,3-und 1,4-Xylylendiamin, 1,3- und 1,4-Bis(aminomethyl)cyclohexan und Bis(4-methylaminophenyl)methan. Triglycidylisocyanurat, N,N'-Diglycidylderivate von cyclischen Alkylenharnstoffen, wie Ethylenharnstoff und 1,3-Propylenharnstoff, oder Hydantoinen, wie 5,5-Dimethylhydantoin, sind weitere geeignete derartige Verbindungen.

Poly(S-glycidyl)-Verbindungen sind z.B. die Di-S-Glycidylderivate von Dithiolen, wie Ethan-1,2-dithiol und Bis-(4-mercaptomethylphenyl)ether.

Beispiele für Epoxidharze mit einer oder mehreren Gruppen der Formel VI, in welcher Q und $Q_2$ zusammen eine Gruppe $-CH_2CH_2-$ oder $-CH_2CH_2CH_2-$bedeuten, sind Bis(2,3-epoxycyclopentyl)ether, 2,3-Epoxycyclopentylglycidylether, 1,2-Bis(2,3-epoxycyclopentyloxy)ethan, 3,4-Epoxy-6-methylcyclohexylmethyl-3',4'-epoxy-6'-methylcyclohexancarboxylat und 2-(3,4-Epoxy)cyclohexyl-5,5-spiro(3',4'-epoxy)cyclohexan-dioxan.

Ebenfalls einsetzbar sind Epoxidharze, in welchen die Epoxidgruppen an Heteroatome verschiedener Art gebunden sind, oder in denen einige oder sämtliche Epoxidgruppen mittelständig sind, wie beispielsweise das N,N,O-Triglycidylderivat des 4-Aminophenols, N-Glycidyl-N'(2-glycidyloxypropyl)-5,5-dimethylhydantoin, Vinylcyclohexendioxid, Limonendioxid, und Dicyclopentadiendioxid.

Besonders bevorzugt setzt man als Komponente (c) gegebenenfalls vorverlängerte Diglycidylether von zweiwertigen Phenolen, vor allem 2,2-Bis-(4-hydroxyphenyl)propan, 2,2-Bis(3,5-dibrom-4-hydroxyphenyl)propan, Bis(4-hydroxyphenyl)methan, Bis(4-hydroxycyclohexyl)methan oder 2,2-Bis-(4-hydroxycyclyohexyl)propan, Polyglycidylether von Novolaken, oder tetraglycidyliertes 4,4'-Diaminodiphenylmethan ein. Ganz besonders bevorzugt sind gegebenenfalls vorverlängerte Diglycidylether von Bisphenol A, Tetrabrom-Bisphenol A oder Bisphenol F, Polyglycidylether von Phenol-Formaldehyd- oder Kresol-Formaldehyd-Novolaken, oder Gemische davon.

Bei Verwendung höherer Anteile an Epoxidharzen (c), z.B. in Mengen von bis 90 Gew. %, bezogen auf die Komponenten (a) und (c), können die erfindungsgemässen Epoxysiloxane auch als reaktive Verdünner und als Flexibilisatoren wirken.

Die Komponente (b) wird in den üblichen wirksamen, d.h. für die Härtung der erfindungsgemässen Gemische ausreichenden Mengen eingesetzt. Das Verhältnis der Komponenten (a), (b), und gegebenenfalls (c) hängt von der Art der verwendeten Verbindungen, der erforderlichen Härtungsgeschwindigkeit und den im Endprodukt gewünschten Eigenschaften ab und kann vom Fachmann auf dem Gebiet der Epoxidharz-Härtung leicht ermittelt werden. Wenn das Härtungsmittel (b) ein Amin ist, werden normalerwiese 0,75 bis 1,25 Aequivalente Aminwasserstoff pro 1 Epoxidäquivalent eingesetzt. Bei Polycarbonsäure- oder Polycarbonsäurehydrid-Härtern verwendet man gewöhnlich 0,4 bis 1,1 Aequivalente Carboxyl- bzw. Anhydridgruppen pro 1 Epoxidäquivalent. Bei der Verwendung von Polyphenolen als Härtungsmittel setzt man zweckmässig 0,75 bis 1,25 phenolische Hydroxylgruppen pro 1 Epoxidäquivalent ein. Beschleuniger werden im allgemeinen in Mengen von 0,1 bis 5 Gewichtsprozent, bezogen auf die Epoxidharze (a) und gegebenenfalls (c), verwendet.

Gewünschtenfalls kann man den härtbaren Gemischen zur Herabsetzung der Viskosität (weitere) reaktive Verdünner, wie z.B. Styroloxid, Butylglycidylether, 2,2,4-Trimethylpentylglycidylether, Phenylglycidylether, Kresylglycidylether oder Glycidylester von synthetischen hochverzweig ten, in der Hauptsache tertiären aliphatischen Monocarbonsäuren, zusetzen. Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die erfindungsgemässen Gemische finden z.B. Anwendung als Klebstoffe oder im Oberflächenschutz, besonders jedoch zur Herstellung von gehärteten Produkten für elektrische und vor allem elektronische Anwendungen. Sie können in jeweils dem speziellen Anwendungsgebiet angepasster Formulierung, in ungefülltem oder gefülltem Zustand, z.B. als Anstrichmittel, Beschichtungsmassen, Lacke, Pressmassen, Tauchharze, Giessharze, Imprägnierharze, Laminierharze und Klebemittel verwendet werden. Besonders geeignet sind sie für Anwendungen als Klebstoffe, Dichtungsmaterialien, Lacke oder Umhüllungsharze.

Die Härtung der erfindungsgemässen Gemische kann auf an sich bekannte Weise ein- oder zweistufig vorgenommen werden. Die Härtung der erfindungsgemässen Gemische erfolgt im allgemeinen durch Erhitzen auf Temperaturen zwischen 80 und 200°C, besonders 100 und 180°C.

Härtbare Gemische, welche strahlungsaktivierbare Härter enthalten, werden geeigneterweise mit aktinischer Strahlung, wie z.B. in den US 4,069,055, US 4,058,401, US 4,394,403 oder EP-A 94 915 beschrieben, gehärtet.

Ein weiterer Gegenstand der Erfindung sind vernetzte Produkte erhalten durch Härtung der erfindungsgemässen härtbaren Stoffgemische.

Die mit den erfindungsgemässen Epoxysiloxanan hergestellten gehärteten Produkte zeichnen sich durch gute mechanische, thermische und chemische Eigenschaften aus, z.B. hohe Zugscherfestigkeit, gute Hitzebeständigkeit und Wasserbeständigkeit sowie ausgezeichnete Klebeeigenschaften an verschiedenen Substraten.

Die Erfindung wird durch die folgenden Beispiele näher erläutert.

Beispiel 1:

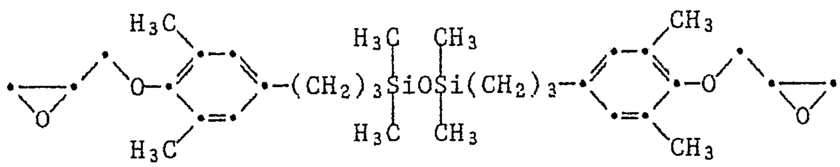

400 g (1,83 Mol) 4-Allyl-2,6-dimethylphenylglycidylether (hergestellt gemäss Beispiel A der EP-A 205 402) und 123,6 g (0,92 Mol) 1,1,3,3-Tetramethyldisiloxan (Fluka AG, Buchs, Schweiz) werden in 530 ml Toluol gelöst und werden in Gegenwart von Hexachlorplatin(IV)säure (18,2 ml einer 0,02 M Lösung in Ethanol) während 24 Stunden unter Rückfluss erhitzt. Nach Entfernung des Lösungsmittels durch Eindampfen erhält man 476,7 g (91 %) eines braunen Epoxysiloxans mit einer Viskosität von 170 mPas (25°C) und einem Epoxidgehalt von 3,27 Aequivalenten/kg.

Elementaranalyse:

| | % C | %H | % Si |
|---|---|---|---|
| berechnet | 67,32 | 8,83 | 9,84 |
| gefunden | 67,88 | 8,83 | 9,20 |

Beispiel 2:

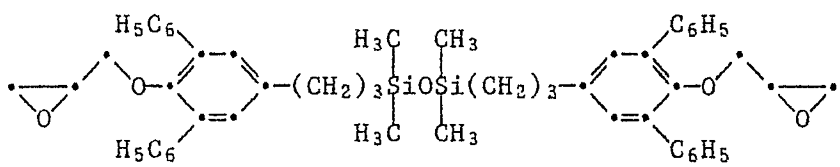

50 g (0,15 Mol) 4-Allyl-2,6-diphenylphenylglycidylether (hergestellt gemäss der EP-A 205 402) und 9,8 g (0,075 Mol) 1,1,3,3-Tetramethyldisiloxan werden in 100 ml Toluol gelöst und werden in Gegenwart von Hexachlorplatin(IV)säure (1,5 ml einer 0,02 M Lösung in Ethanol) wie im Beispiel 1 beschrieben umgesetzt. Nach Eindampfen des Lösungsmittels erhält man 58,8 g (98 %) eines orange-braunen Epoxysiloxans.

Elementanalyse:

| | % C | % H | % Si |
|---|---|---|---|
| berechnet | 76,23 | 7,13 | 6,85 |
| gefunden | 75,80 | 7,00 | 6,30 |

Beispiel 3:

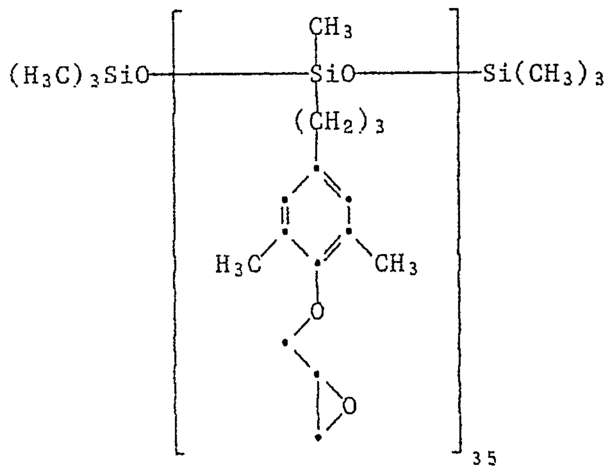

100 g (0,46 Mol) 4-Allyl-2,6-dimethylphenylglycidylether und 29,5 g (0,013 Mol) Polymethylhydrogensiloxan der Formel

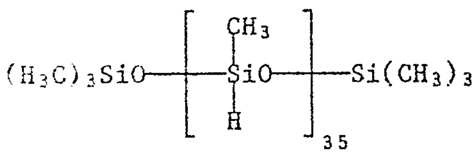

(Fluka AG, Buchs, Schweiz) werden in 200 ml Toluol gelöst und werden in Gegenwart von Hexachlorplatin(IV)säure (4,55 ml einer 0,02 M Lösung in Ethanol) wie im Beispiel 1 beschrieben umgesetzt. Nach Eindampfen des Lösungsmittels erhält man 112 g (86,5 %) eines braunen Epoxysiloxans mit einer Viskosität von 895 mPa•s (25°C), 840 mPas (100°C) und einem Epoxidgehalt von 2,91 Aequivalenten/kg.

Elementaranalyse:

| | % C | % H | % Si |
|---|---|---|---|
| berechnet | 64,38 | 8,09 | 10,49 |
| gefunden | 63,90 | 8,30 | 10,40 |

Anwendungsbeispiele:

Beispiel A1:
100 Gewichtsteile des Epoxysiloxans gemäss Beispiel 1 werden mit 45 Teilen Hexahydrophthalsäureanhydrid vermischt und dann 4 Stunden bei 100°C und 8 Stunden bei 140°C gehärtet. Die Eigenschaften des härtbaren Gemisches und des gehärteten Produktes sind in Tabelle 1 angegeben.

Beispiel A2:
Beispiel A1 wird wiederholt, wobei als Härter statt Hexahydrophthalsäureanhydrid 16 Gewichtsteile 4,4'-Diaminodiphenylmethan eingesetzt werden. Die Eigenschaften des härtbaren Gemisches und des gehärteten Produkts sind aus Tabelle 1 ersichtlich.

Tabelle 1:

| Beispiel | A1 | A2 |
|---|---|---|
| Viskosität bei 80° C (mPa•s) | 10 | 20 |
| Gelierzeit 180° C (min)<br>160° C<br>140° C | 2,00<br>4,83<br>11,50 | 22<br>45<br>90 |
| Zugfestigkeit, ISO R-527 ($N/mm^2$) | 43 | 36 |
| Dehnung, ISO R-527 (%) | 5 | 14 |
| Biegefestigkeit[1], DIN 53435 ($N/mm^2$) | 74 | 50 |
| Zugscherfestigkeit, ISO 4587 ($N/mm^2$) | 21,7 | 24,5 |
| Wasseraufnahme (%)<br>4 Tage, 23°C<br>1 h/100° C | <br>0,15<br>0,47 | <br>0,16<br>0,55 |
| Schlagfestigkeit[1], DIN 53435 ($kJ/m^2$) | 13,0 | 41,7 |
| Glasumwandlungstemperatur, DSC (° C) | 50 | 57 |
| Gewichtsabnahme, TGA (° C)<br>5 % bei<br>10 % bei | <br>315<br>330 | <br>290<br>310 |

[1] Gemessen mit einem Frank-Dynstat Gerät 53573 der Fa. Karl Frank GmbH, Weinheim Birkenau, BRD.

Beispiel A3:

Die in Tabelle 2 angegebenen Mengen (Gewichtsteile) von Epoxidharzen, Härtern und Beschleunigern wurden vermischt und jeweils 2 Stunden bei 120° C und 2 Stunden bei 180° C gehärtet. Die Zugscherfestigkeit der gehärteten Systeme ist aus Tabelle 2 ersichtlich.

Tabelle 2:

| | 1 | 2 | 3 | 4 | 5 |
|---|---|---|---|---|---|
| Bisphenol A Diglycidylether (5,25 Epoxidäquiv./kg) | 100 | 80 | 60 | 40 | 20 |
| Epoxysiloxan nach Bsp. 1 | 0 | 20 | 40 | 60 | 80 |
| Dicyandiamid Härter[1)] | 10 | 10 | 10 | 5 | 5 |
| Zugscherfestigkeit, ISO 4587 ($N/mm^2$) | 19 | 21 | 23 | 27 | 23,5 |
| 4,4'-Diaminodiphenylmethan Härter | 25 | 24,6 | 22,4 | 20,5 | 18,8 |
| Zugscherfestigkeit, ISO 4587 ($N/mm^2$) | 12 | 16 | 17,5 | 21 | 23 |

1) Als Beschleuniger werden 0,8 Gew. %, bezogen auf die Gesamtmenge der Epoxidharze, N-(4-Chlorphenyl)-N',N'-dimethylharnstoff (Monuron) zugegeben.

Die Resultate zeigen, dass die Zugabe des Epoxysiloxans nach Beispiel 1 die Zugscherfestigkeit der gehärteten Systeme wesentlich erhöht.

**Patentansprüche**

1. Epoxysiloxane mit mindestens zwei Gruppierungen der Formel I pro Molekül

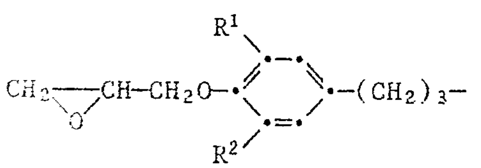

(I),

worin $R^1$ und $R^2$ unabhängig voneinander $C_1$-$C_{10}$-Alkyl, $C_1$-$C_{10}$-Alkoxy, $C_3$-$C_8$-Cycloalkyl, $C_6$-$C_{10}$-Aryl, Benzyl oder ein Halogenatom bedeuten, und worin jede Gruppierung der Formel I jeweils direkt an ein Siliciumatom des Siloxanrests gebunden ist.

2. Epoxysiloxane nach Anspruch 1, worin $R^1$ und $R^2$ gleich sind.

3. Epoxysiloxane nach Anspruch 1, worin $R^1$ und $R^2$ unabhängig voneinander $C_1$-$C_5$-Alkyl, $C_1$-$C_5$-Alkoxy, $C_5$-$C_6$-Cycloalkyl, Phenyl, Benzyl oder ein Chlor- oder Bromatom bedeuten.

4. Epoxysiloxane nach Anspruch 1, worin $R^1$ und $R^2$ unabhängig voneinander Ethyl, iso-Propyl, tert-Butyl, Cyclohexyl, Phenyl, ein Bromatom und insbesondere Methyl bedeuten.

5. Epoxysiloxane nach Anspruch 1 ausgewählt unter Verbindungen der Formeln III, IV oder V

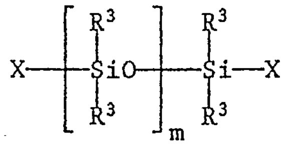

(III),

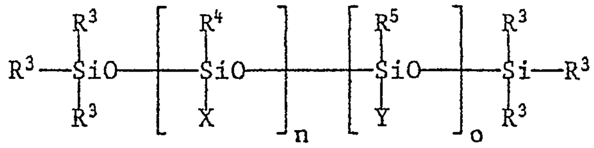

(IV),

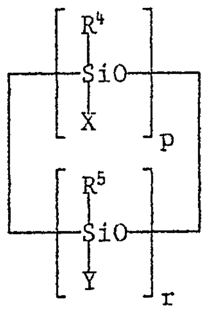

(V),

worin $R^3$ bis $R^5$ unabhängig voneinander $C_1$-$C_5$-Alkyl, $C_1$-$C_5$-Fluoralkyl oder Phenyl sind, X eine Gruppierung der Formel I nach Anspruch 1 bedeutet, Y für einen der Reste $R^3$ bis $R^5$ oder für eine Gruppe $-(CH_2)_2-CN$ oder $-(CH_2)_2-COOR^6$ mit $R^6$ gleich $C_1$-$C_5$-Alkyl steht, m eine ganze Zahl von 1 bis 500, n eine ganze Zahl von 2 bis 500, o Null oder eine ganze Zahl von 1 bis 500, p eine ganze Zahl von 2 bis 10, r Null oder eine ganze Zahl von 1 bis 8 und p + r mindestens 3 sind.

6. Epoxysiloxane nach Anspruch 5, worin $R^3$ bis $R^5$ unabhängig voneinander Methyl, Ethyl, 3,3,3-Trifluorpropyl oder Phenyl, m eine ganze Zahl von 1 bis 50, n eine ganze Zahl von 2 bis 50, o Null oder eine ganze Zahl von 2 bis 50, p eine ganze Zahl von 2 bis 4 und r Null oder eine ganze Zahl von 1 bis 4 sind.

7. Epoxysiloxane nach Anspruch 6, worin $R^3$ bis $R^5$ Methyl, m 2, n 35, p 4 und o und r Null sind.

8. Verfahren zur Herstellung von Epoxysiloxanen nach Anspruch 1 durch Hydrosilylierung eines 4-Allylphenylglycidylethers der Formel II

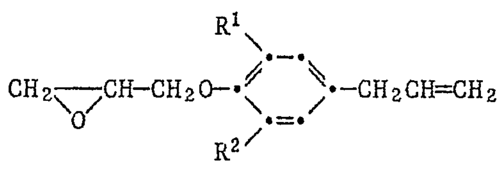

(II),

worin $R^1$ und $R^2$ die im Anspruch 1 angegebene Bedeutung haben, mit einem mindestens zwei H-Si≡ Gruppen enthaltenden Siloxan in Gegenwart eines Katalysators.

9. Härtbares Epoxidharz Stoffgemisch enthaltend (a) ein Epoxysiloxan nach Anspruch 1 und (b) ein Härtungsmittel und/oder einen Härtungskatalysator für Epoxidharze.

10. Stoffgemisch nach Anspruch 9 enthaltend zusätzlich (c) ein Epoxidharz, das keine Siliciumatome enthält.

11. Stoffgemisch nach Anspruch 9, worin die Komponente (b) wärmeaktivierbar ist.

12. Stoffgemisch nach Anspruch 9, worin die Komponente (b) strahlungsaktivierbar ist.

13. Vernetzte Produkte erhalten durch Härtung des Stoffemisches nach Anspruch 9.